Europäisches Patentamt

European Patent Office

Office européen des brevets

(11) Publication number: 0 406 905 A2

# EUROPEAN PATENT APPLICATION

(21) Application number: 90112974.2

(22) Date of filing: 06.07.90

(51) Int. Cl.5: H04B 7/155

(30) Priority: 07.07.89 US 377244

(43) Date of publication of application:
09.01.91 Bulletin 91/02

(84) Designated Contracting States:
DE FR GB SE

(71) Applicant: ORION INDUSTRIES, INC.
30500 Bruce Industrial Parkway
Solon, OH 44139-3396(US)

(72) Inventor: Watkins, Linwood Cleveland, Jr.
683-17 Fairington Lane
Aurora, OH 44202(US)
Inventor: Gordon, Robert T.
3233 Downing Drive
Lynchburg, VA 24503(US)

(74) Representative: Strehl, Schübel-Hopf,
Groening
Maximilianstrasse 54 Postfach 22 14 55
D-8000 München 22(DE)

(54) Dual donor booster system.

(57) A cellular extended area of coverage system includes at least two cellular repeaters or boosters (10A, 10B) coupled together. The boosters have overlapping coverage areas (20A, 20B). One booster in addition overlaps the coverage area (202) of a first adjacent cell (12A). The other booster overlaps the coverage area (204) of a second adjacent cell (12B). The cell coverage areas may or may not overlap. An apparatus and method are provided for measuring RSSI of a movable transceiver (M) located within the first booster coverage area (20A) which is moving into the second booster coverage area (20B). Apparatus and method are further provided for transferring control of the movable transceiver (M) from the first cell site (12A) to the second cell site (12B) in response to that transceiver moving from the first booster coverage area into the second coverage area.

Fig. 3A

EP 0 406 905 A2

# DUAL DONOR BOOSTER SYSTEM

## Reference To Related Patent Application

The present patent application is a continuation-in-part of patent application Serial No. 081,120 entitled Booster and filed August 3, 1987.

## Field of the Invention

The invention pertains to boosters usable in cellular mobile systems to improve coverage. More particularly, the invention pertains to systems and methods for improving handoff between cells in a cellular system.

## Background of the Invention

Current cellular system implementations involve the use of a few to the use of many cells to cover a given geographical area. The cells are designed to provide some degree of overlapping coverage. They are also designed to allow reuse of the same channels several cells away (but within the same geographical area).

In practice, cellular system cell-site designs do not cover all the desired coverage areas due to anomalies of RF propagation. For example, a narrow depression in the terrain such as a ravine or along a road adjacent to a river bed may not have adequate signal coverage due to blockage from nearby terrain.

Another example would be in an underground parking garage, or even in large office buildings where larger than normal signal attenuation would result in unacceptable signal levels. Furthermore, cell-sites in some cellular systems are not located close enough together, thus resulting in poor coverage areas between the cells.

The addition of new cell-sites to remedy such problems is prohibitive in many cases. This is because the numbers of subscribers in these areas are generally of insufficient quantity to justify the cost of a new cell-site installation.

A low cost alternative solution to this problem is to employ a cellular repeater or booster near the coverage area in question. Such a repeater is intended to retransmit the channels from a nearby (donor) cell into the problem area. The retransmitted channels can then be received by appropriate mobile units in the area. Likewise, transmissions from mobile units in the problem area can be retransmitted by the booster such that they can be heard by the channel receivers at the donor cell-site.

One such booster is disclosed in the commonly assigned patent application hereto, entitled Booster, S/N 081,120 filed August 3, 1987. That patent application is hereby incorporated herein by reference. Known booster systems for solving the above described problems can only carry out a handoff operation with a single adjacent cell site.

In addition to the previously noted problems of inadequate coverage within a cell, another problem arises in an area between two cells. In such an area, the coverage may not be adequate to allow handoff directly from one cell to the other. Thus, it would be desirable to be able to implement a system which could handoff a call from a first cell site to a non-overlapping second cell site using an extended area of coverage created with one or more boosters but under the control initially of the first cell site and then subsequently, under the control of the second cell site.

Further, in instances where corridor type extended areas of coverage are created using a plurality of spaced-apart boosters, as described in the parent hereto, it would be desirable to provide handoff from the end of the corridor to an adjacent cell site perhaps in a different cellular system. Alternately, the receiving adjacent cell site could be part of the same cellular system.

## Summary of the Invention

A system and method in accordance with the present invention provide improved communications between a movable transceiver and first and second fixed transceivers. The fixed transceivers need not have overlapping radiation coverage areas.

The system includes first and second boosters. Each booster is capable of boosting or repeating selective electromagnetic signals from the movable transceiver, when the transceiver is in a coverage area served by the respective booster, and transmitting the boosted signal or signals to the respective fixed transceiver.

As the movable transceiver moves from the region of coverage of the first booster into the region of coverage of the second booster its position with respect to those booster coverage areas can be tracked. Overall control of the communication function between the respective tracking booster and the associated fixed transceiver can be switched to the other booster and the other fixed transceiver in response to the location of the movable transceiver.

The two boosters can be co-located and electrically coupled together by a multiple conductor cable. In this embodiment of the invention, the antennas for each of the boosters are oriented so as to provide two spaced-apart areas of coverage with an overlapping region between the two areas of coverage. Each of the areas of coverage overlaps in part an area of coverage associated with a respective one of the fixed transceivers.

In an alternate embodiment of the present invention, the two boosters can be co-located and their antenna systems can be oriented so as to provide two substantially overlapping regions of coverage. Each of the overlapping regions of coverage of a respective booster also overlaps, in part, the region of coverage of a respective fixed transceiver.

In the latter described embodiment, the radiation coverage areas of the two fixed transceivers may or may not overlap. Further, in this latter embodiment, the two co-located boosters, which are also coupled by a multiconductor cable, can transfer the boosting or repeating function with respect to selected movable transceivers between one another so as to carry out a load balancing function.

In each of the above two described alternate embodiments, the respective fixed transceiver remains in overall control of the communications between the respective booster and the mobile transceiver.

In yet another embodiment of the invention, the two boosters need not be co-located. In such an instance, the two boosters would still be coupled by a communication link. The communication link could be a cable or alternately it could be an RF link.

In the instance where the two boosters are not co-located, the regions of coverage established with respect to each of the two boosters must nevertheless still overlap at least in part the region of coverage with respect to the respective fixed transceiver and at least in part the region of coverage of the other booster in the system.

The present system can also include a plurality of boosters spaced-apart from one another so as to form a corridor extension system. In this instance, a first one of the boosters has a coverage area which overlaps at least in part the coverage area of the fixed transceiver. The coverage areas of each of the boosters overlap adjacent booster coverage areas at least in part. A second booster, denotable generally as being at the end of the corridor overlaps at least in part, the coverage area of the second fixed transceiver.

The fixed transceivers can be implemented as cells or cell sites in a cellular radio telephone system. In such an instance, the boosters will boost or repeat electromagnetic communication signals associated with that cellular radio telephone system. The movable transceiver could correspond to a cellular transceiver mounted in a vehicle or a portable cellular transceiver.

In this instance, the first and second cell sites always remain in an overall control of the communication with respect to the movable cellular transceiver. The cell site which is in control of a particular communication being carried out with respect to the extended area of coverage is determined by which of the boosters is currently providing the boosting or repeating function for the movable cellular transceiver. As the movable cellular transceiver moves from one booster coverage area into another, overall control of the communication is automatically switched from one cell site to the other.

Numerous other advantages and features of the present invention will become readily apparent from the following detailed description of the invention and the embodiments thereof, from the claims and from the accompanying drawings in which the details of the invention are fully and completely disclosed as a part of this specification.

## Brief Description of the Drawings

Figure 1 is a block diagram of a portion of a cellular system that uses a booster in accordance with the present invention;

Figure 1A is an overall schematic diagram of a system in accordance with the present invention;

Figures 2A - 2D taken together are a flow diagram of various modes of operation of the booster of Figure 1;

Figure 3A is a diagram of the cell-to-mobile and the booster-to-mobile coverage regions for a two booster bridge-handoff configuration where separate antennas are used for the booster-to-movable unit link;

Figure 3B is a diagram of the cell-to-mobile and the booster-to-mobile antenna coverage regions for a two booster bridge-handoff configuration where common antennas are used for the booster-to-movable unit link;

Figure 4, taken together with Figure 2C, is a flow diagram of a method of operating a first booster so as to implement a handoff of a movable unit to a second booster in a bridge-handoff configuration.

Figure 5 taken together with Figure 2C is a flow diagram of a method of operating a second booster that has been requested by the first booster in a bridge-handoff configuration to boost a signal back to the associated cell in which separate booster-to-movable unit antennas are used; and

Figure 6 is an overall block diagram of first and second interconnected boosters usable to implement the two booster bridge handoff configuration utilizing common antennas on the booster-to-movable unit link.

## Detailed Description of the Preferred Embodiment

While this invention is susceptible of embodiment in many different forms, there is shown in the drawing and will be described herein in detail a specific embodiment thereof with the understanding that the present disclosure is to be considered as an exemplification of the principles of the invention and is not intended to limit the invention to the specific embodiment illustrated.

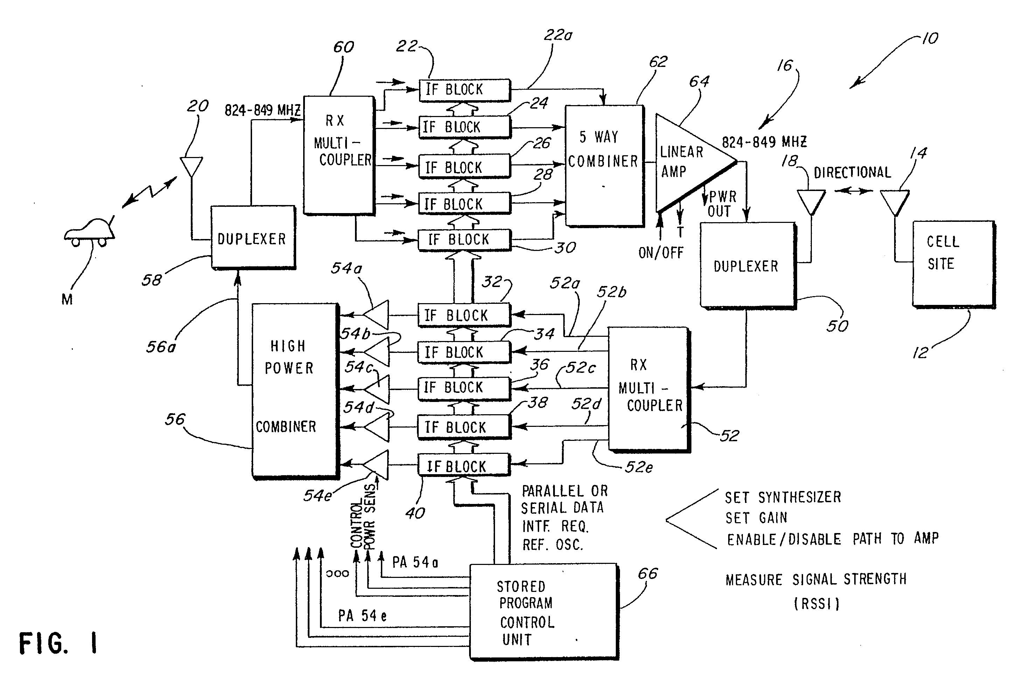

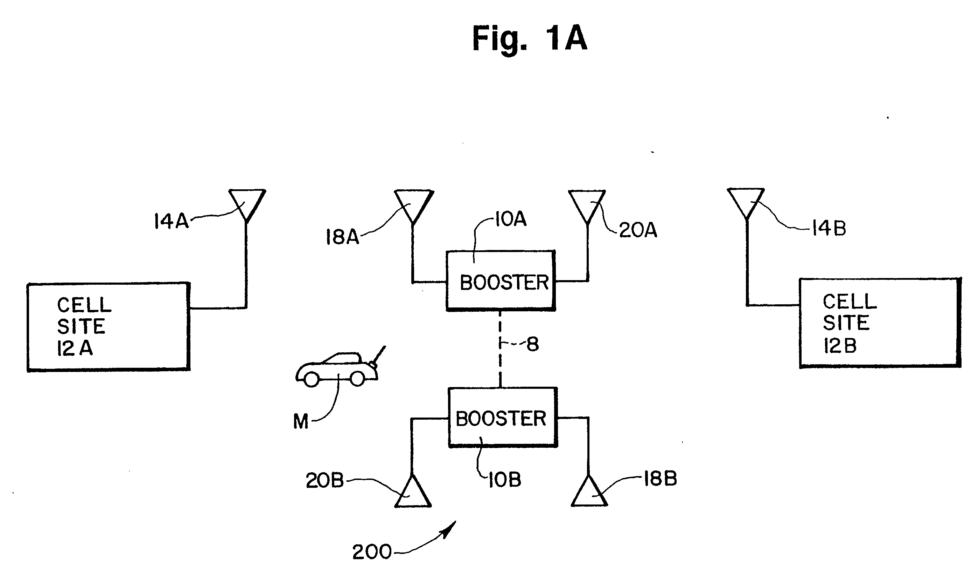

Figure 1 illustrates a portion of a cellular radiotelephone system 10. The system 10 includes a fixed cell-site 12 of a conventional variety used in connection with cellular radio telephone service. The cell-site 12 includes a transmitting and receiving antenna 14.

A booster 16 is illustrated in Figure 1 in bidirectional communication with the cell-site 12 and a movable transceiver M such as a mobile unit or a portable cellular telephone. The booster 16 includes a directional transmit and receive antenna 18 which is used to transmit signals to and receive signals from the cell-site 12. The booster 16 also includes a second antenna 20 for transmitting signals to and receiving signals from the movable transceiver M.

The antenna 20 can be, but need not be, a directional antenna. The booster 16 can repeat both voice and control channels in connection with a cellular mobile transmission. The repeated channel can be repeated at the same frequency as received. Alternately, the booster 16 can shift the transmitted frequency from the received frequency.

The booster 16 includes a plurality of intermediate frequency communication paths implemented as intermediate frequency (IF) blocks 22-30. These communication paths provide for transmission of five channels of control signals, voice or other audio in parallel from the movable unit M to the cell-site 12. The booster 16 also includes a plurality of cell-site to movable communication paths 32-40 for transmitting five channels of control signals, voice or other audio from the cell-site 12 to the movable unit M. The number of IF blocks can be varied and is not a limitation of the present invention.

Each of the intermediate channels 22-30, and 32-40 is identical. Each shifts an incoming frequency down to a predetermined intermediate frequency for filtering (each includes a 30 K Hz bandwidth filter) for amplification. Each amplified intermediate frequency signal is then shifted up to a predetermined transmission frequency.

Signals from the cell-site 12 transmitted to the booster 16 and detected at antenna 18 pass through duplexer 50 and enter multi-coupler 52. The multi-coupler 52 provides RF amplification of low level signals. Output from the multi-coupler 52, on lines 52a-e, provides input to the communication paths 32-40 which, as discussed subsequently, are implemented as intermediate frequency transmission paths.

Output from each of the paths 32-40 is amplified in RF power output amplifiers 54a-e. Amplified outputs from the amplifiers 54a-e are combined in a high power low loss combiner 56. Alternatively, separate antennas may be employed for each RF power amplifier, or a very high power linear amplifier using distortion cancelling techniques may be used with a single antenna. The output from the combiner 56, on a single line 56a, is coupled to a duplexer 58. Output from the duplexer 58 is then transmitted via the antenna 20 to the movable unit M.

Incoming signals received from the movable unit M at the antenna 20 are coupled via the duplexer 58 to multi-coupler 60. Outputs from the multi-coupler 60 drive the intermediate frequency communication paths 22-30. Outputs from the paths 22-30 are combined in a five way combiner 62. The combined output from the five way combiner 62 is amplified in the linear amplifier 64. The output from the amplifier 64 provides an input to the duplexer 50.

Output from the duplexer 50 is coupled via the directional antenna 18 to the cell-site 12. The intermediate frequency communication paths 21-30 and 32-40 operate under control of a stored program control unit 66.

Units that move into the area served by the booster 16 are monitored for several scans thereof to determine the signal level trend before boosting or retransmission of the unit is attempted. As a result, erroneous boosting of channels due to momentarily strong signals from a movable unit can be minimized.

A specific transmission path can be provided for the control channel of the cell-site 12 to allow call originations or terminations to be completed for those movable units which are not currently active but which are in the vicinity of the booster 16. The transmission path for the control channel may be purposely offset to provide F1-F2 repeater operation.

For the same movable units, an "action" threshold level is provided to allow quick response in setting up a boosted transmission path for a new call. This "action" threshold level is generally higher than the minimum threshold level. A signal exceeding this level is flagged for immediate action at the end of a scan. The movable unit will transmit on the channel assigned by the cell-site 12 for a maximum of five seconds without the presence of a correct supervisory audio tone (SAT) being detected by the booster 16.

If the signal from the movable unit exceeds the "action" threshold, a boosted transmission path will be placed on that channel within a couple of seconds. If the signal is below that threshold but above the minimum threshold, a boosted transmission path will be assigned within five seconds or so.

Weaker signals from the movable units that approach the minimum threshold will generally be in an area where some coverage is provided directly from the cell-site 12. This provides adequate time for the booster 16 to average the readings and determine that a new channel is to be boosted.

Each of the intermediate frequency paths 22-30 and 32-40 is implemented with microprocessor controlled step down and step up frequency synthesizers. The use of two frequency synthesizers permits the offset of the control channel to another nearby control channel, as well as the offsetting of the voice channels. The above comments also apply with respect to the transmission paths 32 through 40 which are used for the purpose of boosting signals from the cell-site 12 to the movable unit M.

The stored program control unit 66 includes an 8031 Intel microprocessor. The processor provides overall control for the booster 16. It communicates with the other circuitry in the booster 16 via interface circuitry. The control unit 66 also includes a 10 kilobit data demodulator and a 6 kHZ supervisory audio tone (SAT) demodulator. The demodulator includes circuitry for decoding the 10 kilobit data stream which is utilized in the cellular system and for measuring which of the supervisory audio tones is being transponded by the cellular mobile unit such as the movable unit M.

The control unit 66 is utilized for maintaining signal level history for processing purposes as well as for controlling the frequency synthesizers, such as the synthesizers in each intermediate frequency path 22-30, and 32-40. It is also used for setting the signal gain through each path as well as for measuring the received signal levels on each channel and for carrying out diagnostic and parameter setting functions.

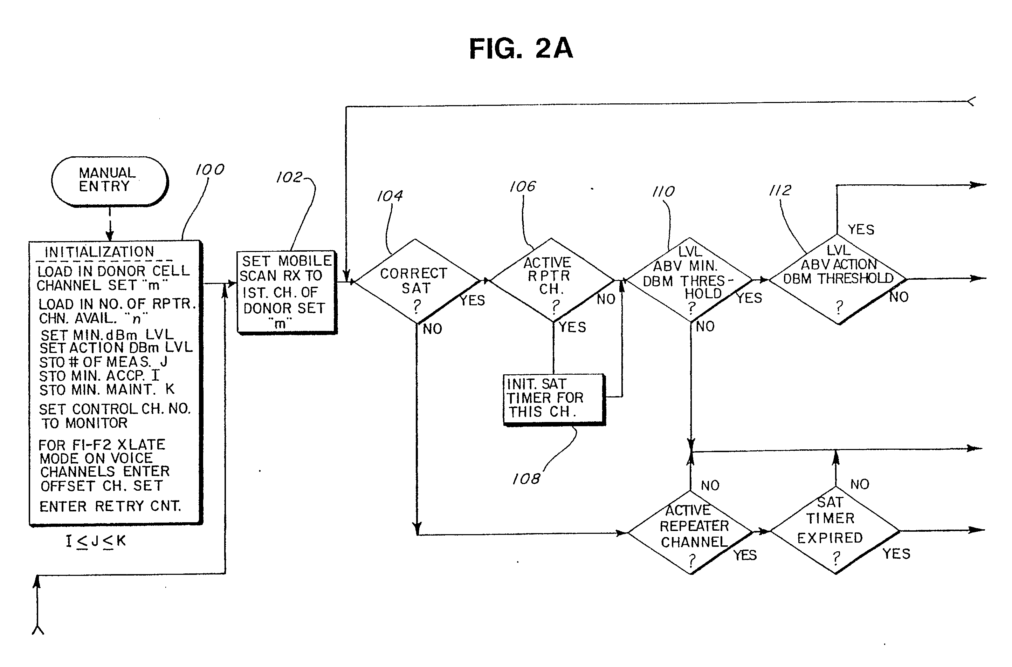

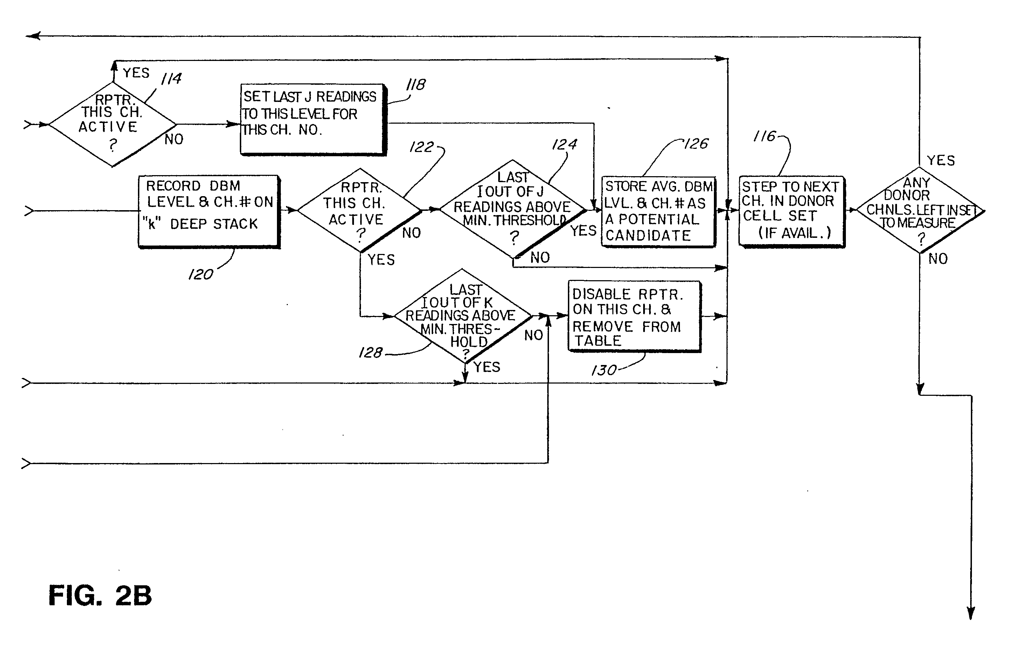

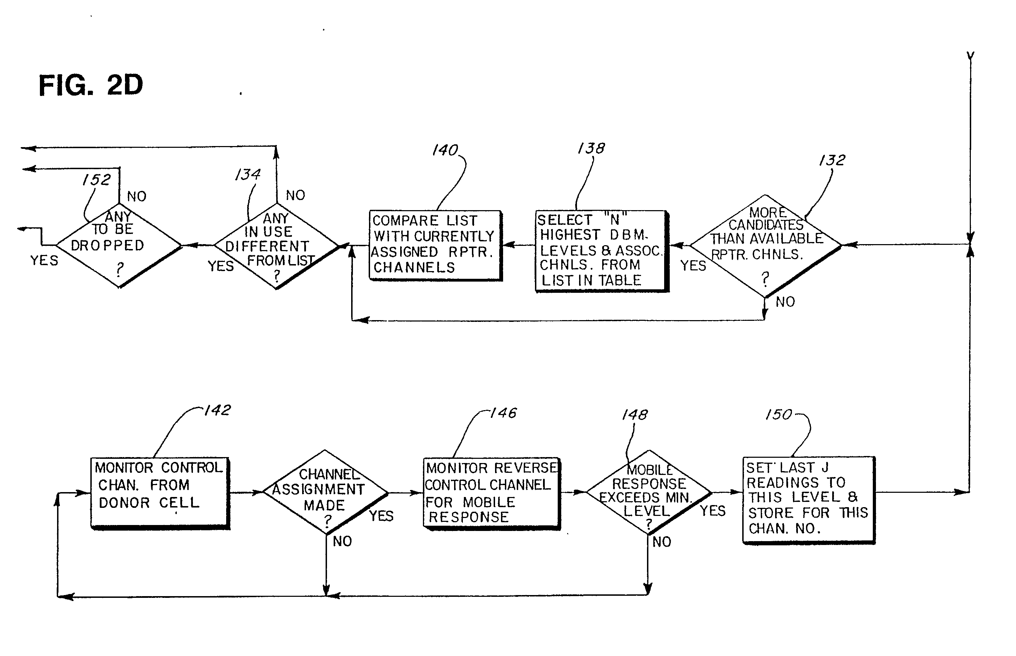

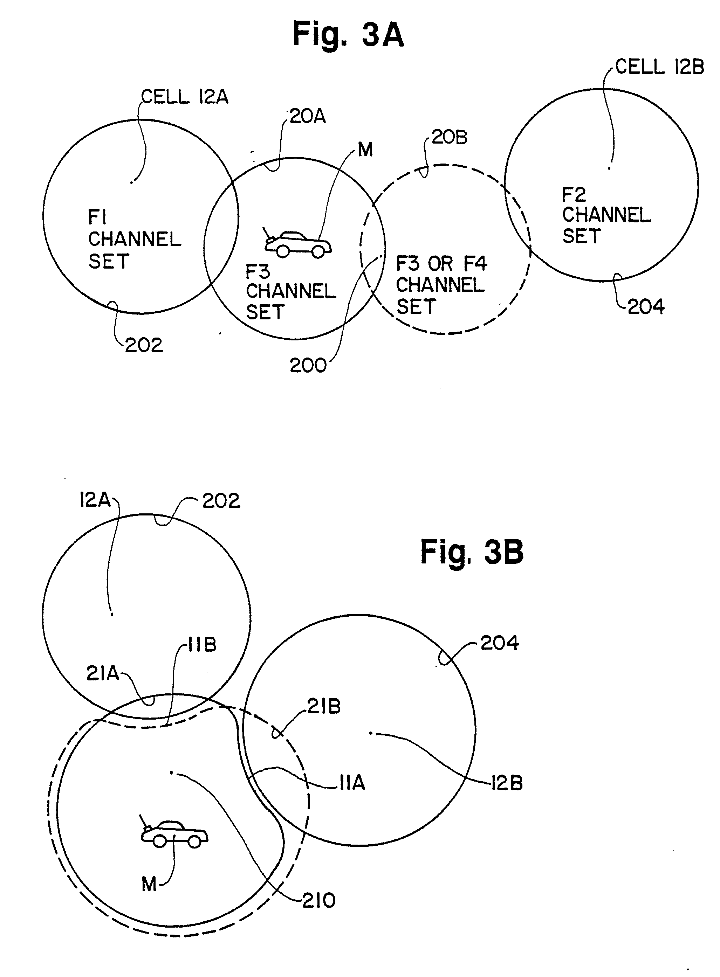

A flow diagram, Figures 2A-2D, describes the sequence of events that takes place in determining candidate channels for boosting. All the channels of the cell-site 12 are scanned. If the measured signal level from a movable unit on any of the cell-site channels exceeds a minimum preset threshold and also has the correct SAT frequency, that channel number and its signal level are recorded. A running history of the signal levels of the various units that are active is maintained in a table. At the end of each channel-set scan the data in the table are analyzed to rank the signals by level. A determination is then made as to which signals are to be boosted or retransmitted.

A handoff-bridge system 200 can be implemented by co-locating two boosters 10A and 10B, corresponding to the booster 10 of Figure 1, that are interconnected by a communication path 8 as illustrated in Figure 1A. The boosters 10A and 10B have different booster-to-movable unit M coverage areas.

Figure 3A is an example of exemplary RF coverage areas of the handoff-bridge system 200. The RF coverage areas 202, 204 of two adjacent donor cells 12A and 12B do not overlap. Figure 3A also illustrates the area of coverage 20A of the booster 10A associated with donor cell 12A. The area of RF coverage 20A partly overlaps the area of coverage 202. The area of RF coverage 20B of the booster 10B associated with the cell 12B overlaps, in part, the coverage area 20A and the coverage area 204.

The cell 12A operates with allocated channels F1. The cell 12B operates with allocated channels F2.

The co-located boosters 10A, 10B may share the same set of channels, F3. Alternately, booster 10B may use a different set of channels, F4, for the output signals from the booster to the movable unit.

Movable units coming from coverage area 202 of cell 12A into the coverage area 20A of the booster 10A get handed-off to the booster 10A, as previously described and receive from and transmit to that booster based upon criteria and logic previously described. Likewise, movable units coming from the coverage area 204 of the cell 12B into the coverage area 20B of the booster 10B get handed-off to the booster 10B as previously described and receive from and transmit to that booster on an appropriate channel.

In addition, as described in more detail subsequently, control of the movable unit M is switched from cell site 12A to cell site 12B in response to that unit moving from coverage area 202, through coverage area 20A and into coverage area 20B.

The booster-to-cell antenna 18A of booster 10A, corresponding to the antenna 18 of Figure 1, is directed toward cell 12A. The booster-to-cell antenna 18B of booster 10B, corresponding to the antenna 18 of Figure 1, is directed toward cell 12B. The booster-to-movable unit antennas 20A and 20B, corresponding to antenna 20, of the two boosters 10A, 10B provide the overlapping coverage areas 20A, 20B but each will cover unique areas adjacent to its cell as illustrated in Figure 3A.

With respect to the system 200 of Figure 3A, when a movable transceiver moves from the region 202 of coverage of the cell 12A into the region of coverage of 20A of the booster 10A, a handoff operation will be initiated by booster 10A. As previously discussed, the booster 10A will then communicate with the movable unit M on an F3 channel.

When the movable unit M moves into the overlapping areas of coverage of the regions 20A and 20B toward the boundary of the coverage area 20A, the received signal strength (RSSI) signal level will be decreasing in the booster 10A and increasing in the booster 10B. When the movable transceiver moves out of the coverage area 20A and into the coverage 20B, it is necessary to transfer immediate and direct control of that unit from the booster 10A to the booster 10B via cell 12A and cell 12B.

To carry out the transfer control, the booster 10A will reduce the reverse signal strength on the F1 channel set reverse path to the cell 12A. Simultaneously, the booster 12B will transmit a corresponding high power signal on the F1 channel reverse path to the cell 12B. As a result, the cell 12A will go through a handoff procedure and transfer control of the movable unit M to the cell 12B.

The handoff command issued by the cell 12A, a handoff to the F2 channel set, is detected by the booster 10A, translated to the F3 channel and sent to the movable unit M. The link between the booster 10A and the cell 12A with respect to the movable unit M is then broken.

Simultaneously, the booster 10B will get a message from the booster 10A causing it to issue a handoff command to the movable unit M on an F2 channel to go to a selected F4 channel. At the same time, the booster 10B will set up a repeat F4/F2 channel to the cell 12B.

The movable unit M will stay on the assigned F4 channel so long as it stays in the coverage area 20B. In the event that it moves into the coverage area 204 from the coverage area 20B, a standard handoff, of the type previously described, from the booster 10B occurs to move the movable unit to cell 12B on F2.

It should be noted that the extended area of coverage represented by the coverage region 20A, with respect to the cell 12A, could be part of an extended area of coverage having a plurality of linked boosters as previously discussed.

It will be understood that the apparatus and process previously described provides a way for a movable unit to move from the control of the cell 12A into control of the cell 12B while still functioning within the overall control of the cellular system not withstanding the fact that the coverage area 202 of the cell 12A does not whatsoever overlap the coverage area 204 of the cell 12B.

If the mobile M is in an area that is covered equally well by either the booster 10A or the booster 10B, a booster that has all of its channels busy may initiate the handoff to the other cell, as described above, if the other booster has several unused channels. Thus the boosters will attempt to balance the load between them.

An alternate configuration 210 is illustrated in Figure 3B, for a bridge booster formed by co-located, interconnected boosters 10A and 10B that use, on the booster-to-movable unit link, common diversity antennas. The regions of coverage 202 and 204 can, but need not, overlap.

Boosters using diversity antennas are disclosed in a commonly assigned, copending patent application entitled, Booster Diversity Receiving System, filed February 24, 1989, Serial No. 315,922. The specification and figures of that application are incorporated herein by reference.

These antennas have coverage regions 21A and 21B that cover nearly the same area but have reduced gain regions that point in different directions. Hence, the booster 10A has coverage region 21A with reduced gain region 11A. The booster 10B has coverage region 21B with reduced gain region 11B.

If the reduced gain regions 11A and 11b are arranged with one directed toward cell 12A and the other directed toward cell 12B, the boosters 10A or 10B can determine via the signal levels from the antennas when the movable transceiver M is in the region of reduced gain 11A or in the region of reduced gain 11B or in the region where the coverage areas 21A and 21B overlap. Based on the location of the transceiver M, the booster control unit determines whether the unit M which is a candidate for handoff, should be handed to cell 12A or to cell 12B. The advantage of this configuration is that separate antennas for the booster-to-mobile link are not required for each booster.

With respect to the system 210, in summary, as the movable unit M moves from the coverage area 202 of the cell 12A into the coverage area 21A of the booster 10A a handoff operation will take place. The booster 10A monitors the reverse F1 channel assigned to the movable unit M. When the RSSI of the reverse F1 channel assigned to the movable unit M exceeds a "hand-in" threshold, the booster 10A transmits a message on the F1 channel to the movable unit M directing it to move to a selected channel in the F3 frequency set. At the same time, the booster 10A establishes a reverse F1 channel to the cell 12A. When the movable unit M switches to the assigned channel in the F3 frequency set the booster 10A will provide communications, including frequency translation to and from the cell 12A.

As the movable unit M moves from the region of coverage 21A into the region of coverage 21B associated with the booster 10B, a handoff operation is carried out between cell 12A and cell 12B.

The RSSI signal level associated with the movable unit M at this time is decreasing with respect to coverage region 21A and increasing with respect to coverage region 21B.

At this time the booster 10A reduces the signal strength of the F1 reverse path to cell 12A and simultaneously booster 10B transmits a high-power signal on the F1 reverse path to cell 12B. As a result, cell 12A goes through its handoff procedure and control is transferred on handoff to cell 12B. A handoff command to go to a particular F2 channel is issued by cell 12A which is received by booster 10A. This handoff message is translated to the F3 channel set and then sent via the booster 10A to the movable unit M. The F1/F3 booster link between cell 12A and booster 10A is then broken.

Cell 12B then sets up a voice channel on the F2 channel which is assigned to the mobile M. At the same time, booster 10B gets a message from booster 10A and issues on the same F2 frequency to the movable unit M a handoff command to go to an F4 channel. Booster 10B also sets up an F4/F2 repeat path to cell 12B. The movable unit M then stays on the assigned F4 channel while it is in the region 21B.

The F4 channel set could be the same as the F3 channel set so long as the same channel of that channel set is not used simultaneously by both booster 10A and booster 10B. Note that the above-described process provides a way to hand off a movable unit by the system from cell 12A, via boosters 10A and 10B, to cell 12B without those cells having overlapping coverage areas.

It is a particular advantage to the system 210 that because of the reduced gain regions 11A and 11b it's possible to distinguish where the movable unit M is with respect thereto. This is useful of course where the movable unit M is under the control of the booster associated with the reduced gain region and the movable unit M is moving into the reduced gain region. Having detected this condition, the above-described handoff sequence can be initiated.

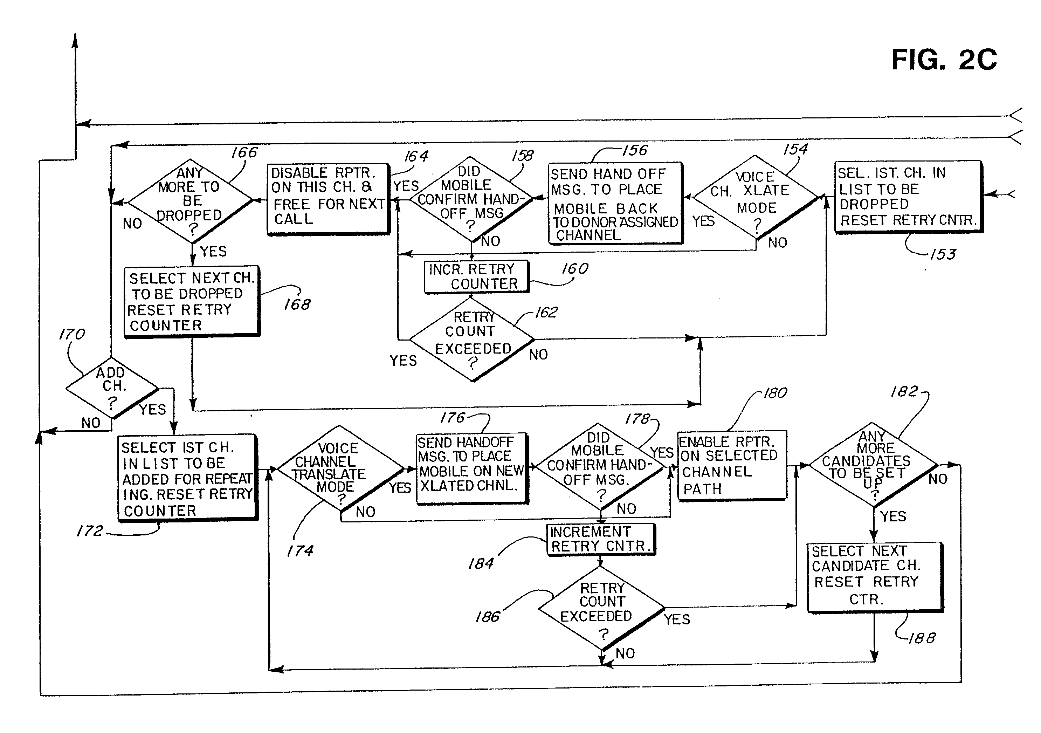

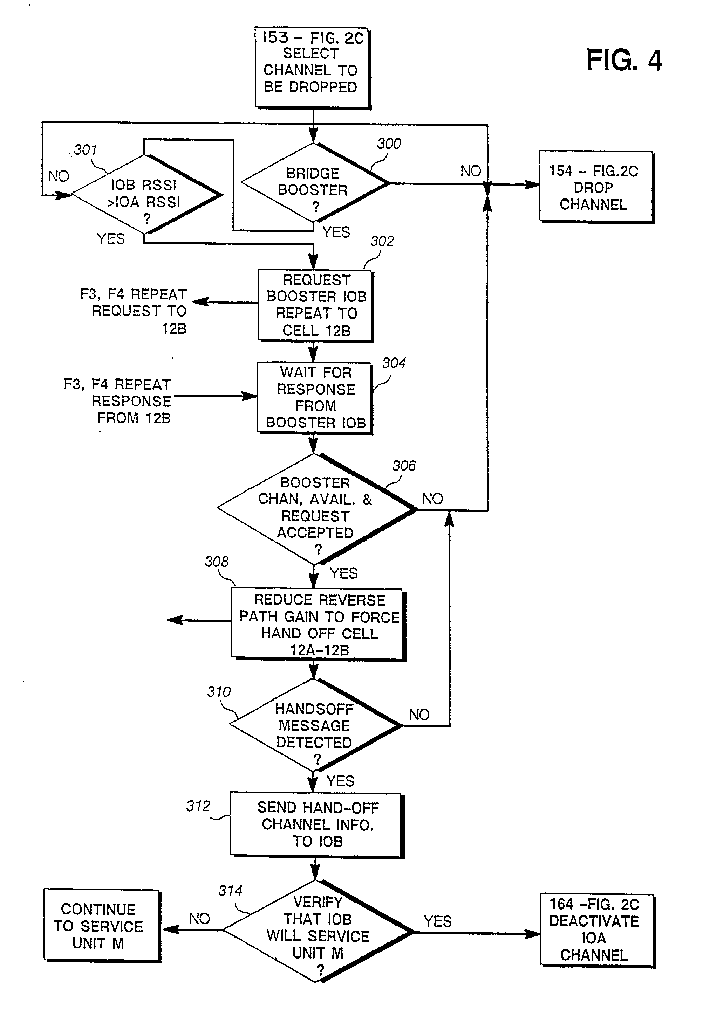

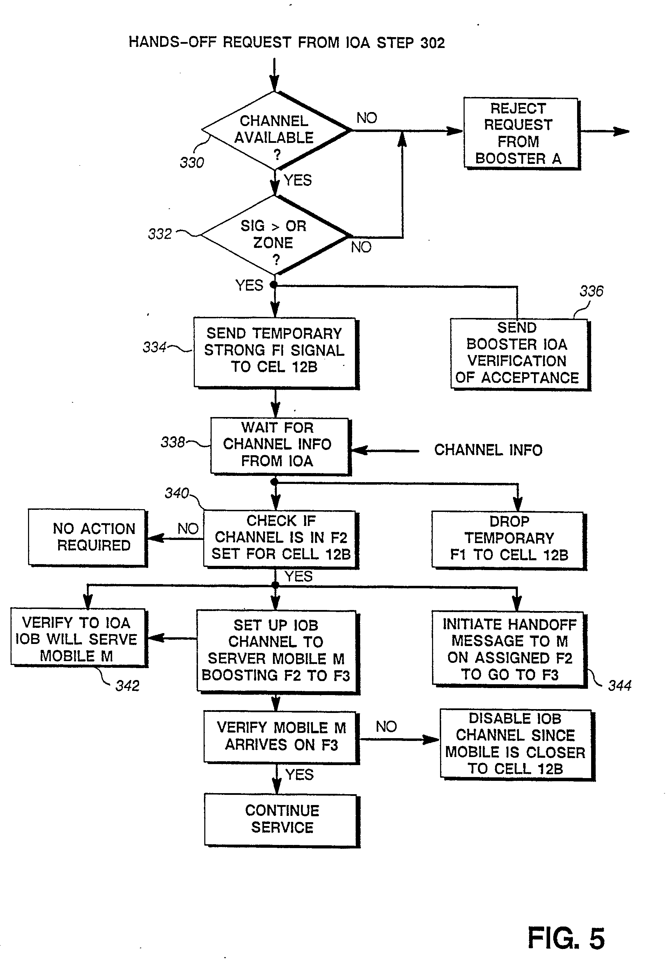

Figure 4 in combination with Figure 5 illustrate the steps of a method that are combined with the steps in Figure 2C, already described, to implement a bridge-handoff system 200 as in Figure 3A. Figure 4 in combination with Figure 5B illustrate the steps of a method that are combined with the steps in Figure 2C to implement a bridge handoff system as in Figure 3B. For explanatory purposes, assume that the signal from the movable unit M is being boosted by the booster 10A but is now no longer a candidate for boosting, Block 153 of Figure 2C.

With reference to Figure 4, Booster 10A determines if it is in a bridge-handoff configuration in a step 300. If it is and if the 10B reverse path RSSI is greater than the 10A reverse path RSSI in step 301, then Booster 10A requests that Booster 10B transmit a high level F1 signal with proper SAT tone to cell 12B in a step 302.

If the mobile signal and the available channels meet criteria as described below, booster 10B will send a strong temporary F1 signal to cell 12B as requested and respond with a message to booster 10A in a step 304.

If booster 10B accepts the request, in a step 306, booster 10A will then reduce the F1 reverse path signal transmitted to cell 12A in a step 308 causing cell 12A to go into its handoff procedure. During the handoff procedure the cell 12B will receive a strong mobile signal because that signal is being transmitted by Booster 10B.

When cell 12A hands the mobile M to cell 12B by sending a handoff message to go to an F2 channel, the booster 10A will detect this message in a step 310. This handoff channel information will be transmitted to the booster 10B in a step 312.

In response, booster 10B sends movable unit M another handoff message to go to an F3 or F4 channel and provides verification to booster 10A in a step 314 that it will service the unit M. Booster 10B then sets up a channel to boost from F2 to F3 or F4.

Alternately, if booster 10B could not boost the mobile signal to cell 12B or if cell 12A did not hand the mobile to cell 12B, booster 10A would drop the channel in the step 164 of Figure 2C.

Figure 5 illustrates the steps of the method carried out by booster 10B in response to the operation of the booster 10A, described above, where separate booster-to-mobile antennas are used for boosters 10A and 10B. Upon the request from Booster 10A, step 302, to repeat its booster-to-cell signal to cell 12B, booster 10B will, in a step 330 determine if it has a free channel. If a channel is available, booster 10B will determine in a step 332 if the mobile signal being received on its antennas exceeds the level that would make that mobile a candidate for being boosted.

If both of these conditions are true, Booster 10B will, in a step 334, send a strong F1 signal to cell 12B. In a step 336, it will send an acceptance signal to Booster 10A. Booster 10B then waits for the receipt of a handoff channel number from booster 10A in a step 338. When the handoff channel information is received, the temporary F1 signal of step 334 is discontinued.

If the channel number received from booster 10A is one of the F2 (cell 12B) set, step 340, booster 10B will set up the channel for boosting by entering step 172 of Figure 2C and verification is sent to 10A in a step 342. The booster 10B transmits, in a step 344, a message to the unit M on the assigned F2 Channel to switch to the selected F3 or F4 channel for service by booster 10B. If the channel number is not in the cell 12B set, booster 10A is allowed to continue operation for mobile M.

The handoff algorithm for the alternate antenna configuration, where Boosters 10A and 10B use common antennas, is nearly identical to that described above. There is no change in the steps of Figure 4 executed by the booster 10A. The operation of the booster 10B is changed only in the criterion for acceptance of the mobile signal, step 332 of Figure 5.

In the common antenna configuration, in the step 332, booster 10B determines if the movable unit M is in the reduced gain region 11A of the antenna 20A. If the signal from the movable unit M is in the 11A region, booster 10B will accept the request from booster 10A if booster 10B has an available channel. The remaining steps of Figure 5 are the same as previously discussed.

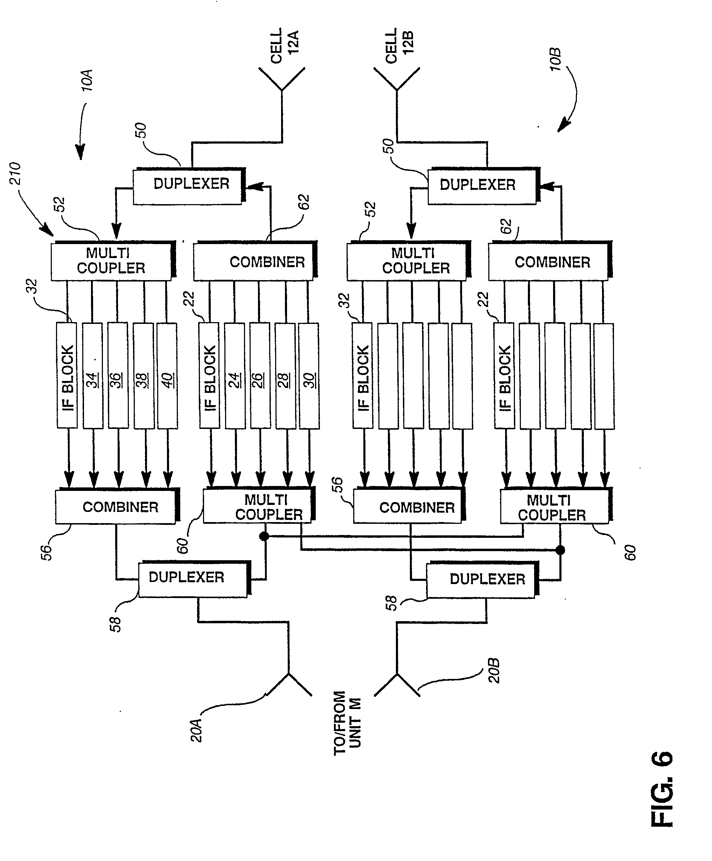

Figure 6 illustrates an overall block diagram of the system 210. The system 210, as previously discussed, includes boosters 10A and 10B which are interconnected when the boosters 10A and 10B share common diversity antennas 20A and 20B on the movable unit to booster links.

From the foregoing, it will be observed that numerous variations and modifications may be effected without departing from the spirits and scope of the novel concept of the invention. It is to be understood that no limitation with respect to the specific apparatus illustrated herein is intended or should be inferred. It is, of course, intended to cover by the appended claims all such modifications as fall within the scope of the claims.

## Claims

1. A system for improving communications between a movable transceiver (M) and one of a first fixed transceiver (14A) or a second fixed transceiver (14B) comprising:
first means (10A) for boosting selected electromagnetic signals between the movable transceiver and one of the fixed transceivers when the movable transceiver is positioned in a first region (20A);
second means (10B) for boosting selected electromagnetic signals between the movable transceiver and the other of the fixed transceivers when the movable transceiver is positioned in a second region (20B) which overlaps at least in part, said first region; and
means, located at least in part, in said first boosting means, for transferring one of said selected electromagnetic signals being boosted therein to said second means for boosting.

2. A system as in claim 1 with each said booster (10A, 10B) having a transmitting antenna directed toward said respective regions (20A, 20B).

3. A system as in claim 1 with said boosters (10A, 10B) sharing at least one transmitting antenna directed toward one of said regions (20A; 20B).

4. A system as in claim 3 with said boosters (10A, 10B) sharing a second antenna, spaced from said first antenna, and directed toward the other of said regions.

5. A system as in claim 4 including means for switching between said first and said second antennas.

6. A system as in claim 1 including means (8) for communicating between said first and said second boosting means.

7. A system as in claim 1 including means, responsive to a selected condition for requesting that said second means (10B) initiate boosting a signal currently being boosted by said first means (10A).

8. A system as in claim 7 with each said booster means (10A, 10B) including signal strength measurement means.

9. A system as in claim 8 wherein said selected condition corresponds to a signal strength parameter of said signal being boosted having dropped below a predetermined threshold.

10. A method for improving communications between movable transceiver (M) a first and second fixed transceivers (14A, 14B) using the system of claim 1 comprising:
boosting selected electromagnetic signals between the movable transceiver and one of the fixed transmitters when the movable transceiver is positioned in a first region (20A);
boosting selected electromagnetic signals between the movable transceiver and the other of the fixed transmitters when movable transceiver is positioned in a second region (20B) which overlaps at least in part, the first region; and
transferring one of the selected electromagnetic signals being boosted from one of the fixed transmitters to the other.

FIG. 1

SET SYNTHESIZER
SET GAIN
ENABLE/DISABLE PATH TO AMP

MEASURE SIGNAL STRENGTH
(RSSI)

EP 0 406 905 A2

# Fig. 1A

EP 0 406 905 A2

# FIG. 2A

INITIALIZATION 100

LOAD IN DONOR CELL CHANNEL SET "m"

LOAD IN NO. OF RPTR. CHN. AVAIL. "n"

SET MIN. dBm LVL
SET ACTION DBm LVL
STO # OF MEAS. J
STO MIN. ACCP. I
STO MIN. MAINT. K

SET CONTROL CH. NO. TO MONITOR

FOR FI-F2 XLATE MODE ON VOICE CHANNELS ENTER OFFSET CH. SET

ENTER RETRY CNT.

$I \leq J \leq K$

MANUAL ENTRY

SET MOBILE SCAN RX TO IST. CH. OF DONOR SET "m" 102

CORRECT SAT ? 104

ACTIVE RPTR CH. ? 106

INIT. SAT TIMER FOR THIS CH. 108

LVL ABV MIN. DBM THRESHOLD ? 110

LVL ABV ACTION DBM THRESHOLD ? 112

ACTIVE REPEATER CHANNEL ?

SAT TIMER EXPIRED ?

EP 0 406 905 A2

FIG. 2B

- 114 — RPTR. THIS CH. ACTIVE? — YES / NO
- 118 — SET LAST J READINGS TO THIS LEVEL FOR THIS CH. NO.
- 120 — RECORD DBM LEVEL & CH.# ON "k" DEEP STACK
- 122 — RPTR. THIS CH. ACTIVE? — NO / YES
- 124 — LAST I OUT OF J READINGS ABOVE MIN. THRESHOLD? — YES / NO
- 126 — STORE AVG. DBM LVL. & CH.# AS A POTENTIAL CANDIDATE
- 116 — STEP TO NEXT CH. IN DONOR CELL SET (IF AVAIL.)
- ANY DONOR CHNLS. LEFT IN SET TO MEASURE? — YES / NO
- 128 — LAST I OUT OF K READINGS ABOVE MIN. THRESHOLD? — NO / YES
- 130 — DISABLE RPTR. ON THIS CH. & REMOVE FROM TABLE

EP 0 406 905 A2

FIG. 2C

EP 0 406 905 A2

# FIG. 2D

EP 0 406 905 A2

# Fig. 3A

# Fig. 3B

**FIG. 4**

153 – FIG. 2C
SELECT
CHANNEL TO
BE DROPPED

301
NO → IOB RSSI
>IOA RSSI
?
YES

300
BRIDGE
BOOSTER
?
→ NO → 154 – FIG. 2C
DROP
CHANNEL
YES

302
REQUEST
BOOSTER IOB
REPEAT TO
CELL 12B
→ F3, F4 REPEAT
REQUEST TO
12B

304
F3, F4 REPEAT
RESPONSE
FROM 12B → WAIT FOR
RESPONSE
FROM
BOOSTER IOB

306
BOOSTER
CHAN, AVAIL. &
REQUEST
ACCEPTED
?
→ NO
YES

308
REDUCE REVERSE
PATH GAIN TO FORCE
HAND OFF CELL
12A-12B

310
HANDSOFF
MESSAGE
DETECTED
?
→ NO
YES

312
SEND HAND-OFF
CHANNEL INFO.
TO IOB

314
CONTINUE
TO SERVICE
UNIT M ← NO ← VERIFY
THAT IOB
WILL SERVICE
UNIT M
?
→ YES → 164 –FIG. 2C
DEACTIVATE
IOA
CHANNEL

16

HANDS-OFF REQUEST FROM IOA STEP 302

```
                        │
                        ▼
             ╱◆╲
           ╱  CHANNEL ╲      NO          ┌──────────────┐
          ◆  AVAILABLE  ◆ ──────────────▶│   REJECT     │ ────────▶
           ╲     ?    ╱                   │   REQUEST    │
  330        ╲◆╱                          │    FROM      │
              │ YES                       │  BOOSTER A   │
              ▼                           └──────────────┘
             ╱◆╲                                  ▲
           ╱  SIG > OR ╲                          │
  332 ─── ◆    ZONE      ◆ ─── NO ────────────────┘
           ╲     ?    ╱
             ╲◆╱
              │ YES
              ●─────────────────────────────────────┐
              ▼                                      │
   ┌──────────────────┐                    ┌──────────────────┐
   │  SEND TEMPORARY  │                    │      SEND         │   336
334│  STRONG FI SIGNAL│                    │   BOOSTER IOA     │
   │    TO CEL 12B    │                    │  VERIFICATION     │
   └──────────────────┘                    │  OF ACCEPTANCE    │
              │                            └──────────────────┘
              ▼
   ┌──────────────────┐
   │   WAIT FOR       │◀──────── CHANNEL INFO
338│  CHANNEL INFO    │
   │    FROM IOA      │
   └──────────────────┘
              ●──────────────────────────────────────┐
              ▼                                       ▼
┌────────────┐  NO ┌──────────────────┐    ┌──────────────────┐
│ NO ACTION  │◀────│  CHECK IF        │    │     DROP         │
│ REQUIRED   │     │  CHANNEL IS IN F2│    │   TEMPORARY      │
└────────────┘ 340 │  SET FOR CELL 12B│    │   F1 TO CELL 12B │
                   └──────────────────┘    └──────────────────┘
                         │ YES
        ┌────────────────●────────────────────────────┐
        ▼                ▼                             ▼
┌────────────┐  ┌──────────────────┐        ┌──────────────────┐
│VERIFY TO IOA│ │  SET UP IOB      │        │ INITIATE HANDOFF │
│IOB WILL SERVE│◀│ CHANNEL TO      │        │  MESSAGE TO M    │
│ MOBILE M   │  │  SERVER MOBILE M │        │  ON ASSIGNED F2  │
└────────────┘  │  BOOSTING F2 TO F3│       │   TO GO TO F3    │
      342       └──────────────────┘        └──────────────────┘  344
                        │
                        ▼
              ┌──────────────────┐   NO    ┌──────────────────┐
              │  VERIFY MOBILE M │ ───────▶│   DISABLE IOB    │
              │  ARRIVES ON F3   │         │  CHANNEL SINCE   │
              └──────────────────┘         │  MOBILE IS CLOSER│
                        │ YES              │   TO CELL 12B    │
                        ▼                  └──────────────────┘
              ┌──────────────────┐
              │    CONTINUE      │
              │    SERVICE       │
              └──────────────────┘
```

# FIG. 5

FIG. 6